# EUROPÄISCHE PATENTSCHRIFT

(11) **EP 1 509 797 B1**
(45) Veröffentlichungstag und Bekanntmachung des Hinweises auf die Patenterteilung: **07.12.2011**
(21) Anmeldenummer: 03756933.2
(22) Anmeldetag: 02.04.2003
(51) Int. Cl.: G02B 6/38

(54) **OPTISCHE STECKVERBINDUNG**
OPTICAL PLUG-IN CONNECTION
SYSTEME DE CONNEXION OPTIQUE PAR ENFICHAGE

(30) Priorität: 06.06.2002 CH 959022002
(43) Veröffentlichungstag der Anmeldung: 02.03.2005
(73) Patentinhaber: HUBER+SUHNER AG, 9100 Herisau (CH)
(72) Erfinder: THÄLER, Willi, CH-9200 Gossau (CH); VOLLENWEIDER, David, CH-9200 Gossau (CH); COLUMBUS, Michael, CH-7323 Wangs (CH)
(74) Vertreter: Ottow, Jens M.
(86) Internationale Anmeldenummer: PCT/CH2003/000212
(87) Internationale Veröffentlichungsnummer: WO 2003/104870

(56) Entgegenhaltungen:
- EP-A- 0 570 652
- EP-A- 1 072 917
- US-A- 4 898 446
- US-A- 5 883 995

## Beschreibung

### STAND DER TECHNIK

In der faseroptischen Kommunikationstechnik werden seit langem optische Steckverbindersysteme eingesetzt, bei denen zwei optischen Fasern dadurch miteinander gekoppelt werden, dass zwei Steckverbinder, in denen jeweils eine der Fasem in einer Ferrule endet, von gegenüberliegenden Seiten in eine Kupplung bzw. einen Adapter so eingesteckt werden, dass die Ferrulen von beiden Seiten in eine in der Kupplung angeordnete Führungshülse ("sleeve") hineingleiten und mit den Stirnseiten aneinander stossen. Derartige Steckverbindersysteme sind unter der Bezeichnung SC, LC, E-2000 (LSH) oder LX.5 bekannt und auf dem Markt.

Bei den bekannten Steckverbindungen werden üblicherweise Rastvorrichtungen eingesetzt, durch die der Steckverbinder beim Einstecken in die Kupplung verrastet wird, so dass er nur nach einem Entrasten wieder aus der Kupplung herausgezogen werden kann. Bei einer Steckverbindung vom Typ E-2000 (LSH), wie sie im wesentlichen in der eingangs genannten EP-B1-0 570 652 beschrieben ist, ist in der Kupplung eine Rastzunge ausgebildet, an deren Ende als Rastelement ein Haken angeformt ist. Beim Einstecken des Steckverbinders rastet dieser Haken an einer Hinterschneidung am Steckverbinder ein und hält den Steckverbinder so in der Kupplung. Diese Verrastung kann dadurch gelöst werden, dass die Rastzunge durch einen am Steckverbinder angeordneten, von aussen bedienbaren Kipphebel angehoben wird.

Bei einer Steckverbindung vom Typ LX.5, wie sie in der eingangs genannten US-A-5,883,995 im wesentlichen beschrieben ist, ist am Steckverbinder selbst ein Rastarm mit einem nach oben abgewinkelten, hakenförmigen Rastelement angeformt. Beim Einstecken des Steckverbinders in die Kupplung rastet das Rastelement an einer auf der Oberseite der Kupplung angeordneten Hinterschneidung ein und kann dadurch wieder entrastet werden, dass der Rastarm in einem ausserhalb der Kupplung befindlichen Abschnitt nach unten gedrückt wird. Ein ähnliches Prinzip mit einem am Steckverbinder schwenkbar gelagerten Rasthebel ist auch in der eingangs genannten EP-A1-1 072 917 verwirklicht.

Bei den oben beschriebenen bekannten Steckverbindungssystemen sind die Rastmechanismen so ausgebildet, dass sie durch Drücken eines Hebels oder des Rastarmes selbst leicht entrastet werden können. Dadurch kann es leicht auch zu einem unbeabsichtigten Aufheben der Verrastung und schliesslich zu einem unbeabsichtigten Ausstecken des Steckverbinders kommen. Dies hat nicht nur zur Folge, dass die faseroptische Verbindung an dieser Stelle ungewollt unterbrochen wird, sondem führt auch zu Sicherheitsproblemen, weil aus der unterbrochenen Verbindung möglicherweise Laserstrahlung von personengefährdender Intensität austreten kann.

Eine gattungsgemässe Steckverbindung ist im Stand der Technik aus der US 4,898,446 bekannt geworden. Diese weist eine Kupplung auf, in welche ein Steckverbinder einsteckbar ist. Der Steckverbinder besitzt aussenseitig radial vorspringende Rastzungen, die ein Verrasten des Steckverbinders in der Kupplung ermöglichen. Zum Lösen der Rastverbindung ist ein Werkzeug vorgesehen.

Es ist daher wünschenswert, optische Steckverbindungen zu haben, welche die oben genannten Nachteile nicht aufweisen.

### DARSTELLUNG DER ERFINDUNG

Es ist daher Aufgabe der Erfindung, eine weitere optische Steckverbindung der eingangs genannten Art zu schaffen, bei der ein unbeabsichtigtes Lösen der Verbindung mit Sicherheit ausgeschlossen ist.

Die Aufgabe ist gemäss Anspruch 1 gelöst. Grundsätzlich wäre es zur Lösung der Aufgabe denkbar, an der Steckverbindung zusätzlich zu den Rastmitteln Sicherungsmittel vorzusehen, die unabhängig von den Rastmitteln die Verbindung gegen ein unbeabsichtigtes Lösen sichern. Dies würde jedoch separate Rastmittel und Sicherungsmittel zur Folge haben, welche den konstruktiven Aufbau und die Herstellung der Steckverbindung verkomplizieren und übermässig verteuern. Die Erfindung geht deshalb einen anderen Weg: Gemäss der Erfindung sind die Rastmittel selbst derart ausgebildet, dass sie im verrasteten Zustand nicht unbeabsichtigt entrastbar sind.

Gemäss der Erfindung sind die Rastmittel derart ausgebildet, dass sie im verrasteten Zustand nur durch Einsatz eines separaten Werkzeuges entrastbar sind. Der Benutzer der Steckverbindung muss daher bewusst ein separates Werkzeug einsetzen, um die Verrastung zu lösen, so dass die Entrastung ein bewusstes und überlegtes Handeln voraussetzt.

Die Erfindung wird bei Steckverbindungen verwirklicht, bei denen die Rastmittel einen an seinem freien Ende mit einem Rastelement versehenen, elastisch verbiegbaren Rastarm umfassen, welcher sich elastisch verbiegend beim Einstecken des Steckverbinders in die Kupplung den Steckverbinder in der Kupplung verrastet, und welcher durch ein erneutes elastisches Verbiegen entrastet werden kann.

Für die einfache Realisierung ist der Rastarm am Steckverbinder angeordnet ist.

Erfindungsgemäss ist am Steckverbinder ein Verriegelungselement angeordnet, welches mittels eines Werkzeuges zwischen einer ersten Position, in welcher der Rastarm weitgehend ungehindert elastisch verbogen werden kann, und einer zweiten Position, in welcher der Rastarm durch das Verriegelungselement an einer elastischen Verbiegung gehindert wird, hin- und herbewegt werden kann. Gemäss einer Weiterbildung der Erfindung erstreckt sich der Rastarm in einem Abstand parallel zum Gehäuse des Steckverbinders erstreckt, der Rastarm zum Verrasten und Entrasten zum Gehäuse des Steckverbinders hin elastisch verbogen wird, und das Verriegelungselement zwischen dem Rastarm und dem Gehäuse des Steckverbinders angeordnet ist.

Das Verriegelungselement ist dabei in einer Weiterbildung parallel zum Rastarm zwischen der ersten und zweiten Position verschiebbar, wobei es in Längsrichtung mittels einer Führungsschiene und einer Führungsnut bzw. eines Führungsschlitzes geführt ist und seitlich über den Rastarm hinausstehende Noppen bzw. Nasen aufweist, an welchen zum Verschieben des Verriegelungselementes ein nach Art einer Gabel ausgebildetes Werkzeug angreifen kann.

Dabei kann das Verriegelungselement als massives Teil aus einem Kunststoff hergestellt sein, oder es kann als Blechbiegeteil ausgebildet sein. Im letztgenannten Fall ist das Verriegelungselement vorzugsweise V-förmig gebogen mit einem Federarm als dem einen Schenkel des "V" und zwei parallelen Auflagearmen, zwischen denen ein Führungsschlitz angeordnet ist, als dem anderen Schenkel des "V".

Oder das Verriegelungselement ist um eine senkrecht zum Rastarm stehende Achse zwischen der ersten und zweiten Position verdrehbar, wobei in dem Rastarm eine Ausnehmung angeordnet ist, welche das Verriegelungselement beim elastischen Verbiegen des Rastarmes zumindest teilweise aufnimmt, wenn es sich in der ersten Position befindet, welche das Verriegelungselement jedoch nicht aufnehmen kann, wenn es sich in der zweiten Position befindet, und wobei das Verriegelungselement nur mittels eines Werkzeuges, insbesondere in Form eines Schraubendrehers, verdrehbar ist.

In einer anderen bevorzugten Weiterbildung ist der Rastarm durch einen angeformten Entriegelungshebel elastisch verbiegbar, und ist der Entriegelungshebel in seiner Länge so kurz gewählt, dass er bei in die Kupplung eingestecktem Steckverbinder nur mittels eines Werkzeuges von aussen betätigbar ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in perspektivischer Seitenansicht einen optischen Steckverbinder mit einem (getrennt dargestellten) in Steckrichtung verschiebbaren Verriegelungselement für den Rastarm gemäss einem ersten bevorzugten Ausführungsbeispiel der Erfindung;
- Fig. 2: den Steckverbinder aus Fig. 1 im in eine Duplexkupplung eingesteckten und verriegelten Zustand;
- Fig. 3: den Steckverbinder aus Fig. 1 im in eine Duplexkupplung eingesteckten und entriegelten Zustand;
- Fig. 4: die Steckverbindung aus Fig. 2 mit einem beispielhaften Werkzeug zur Ver- bzw. Entriegelung des Steckverbinders;
- Fig. 5: in der Ansicht von der Seite (Fig. 5a) und von oben (Fig. 5c) einen optischen Steckverbinder mit drehbarem Verriegelungselement für den Rastarm gemäss einem zweiten bevorzugten Ausführungsbeispiel der Erfindung, sowie das zugehörige Verriegelungselement (Fig. 5b);
- Fig. 6: einen Steckverbinder vom Typ LC mit einem verkürzten Entriegelungshebel gemäss einem weiteren Ausführungsbeispiel der Erfindung;
- Fig. 7: einen Steckverbinder vom Typ LC mit einem an einer Sollbruchstelle verkürzbaren Entriegelungshebel gemäss einem weiteren Ausführungsbeispiel der Erfindung;
- Fig. 8: in einer zu Fig. 1 vergleichbaren Darstellung einen Steckverbinder mit einem zu Fig. 1 alternativen Verriegelungselement in Form eines Blechbiegeteils im entriegelten Zustand;
- Fig. 9: den Steckverbinder nach Fig. 8 im verriegelten Zustand; und
- Fig. 10: das Verriegelungselement aus Fig. 8, 9 als solches.

### WEGE ZUR AUSFÜHRUNG DER ERFINDUNG

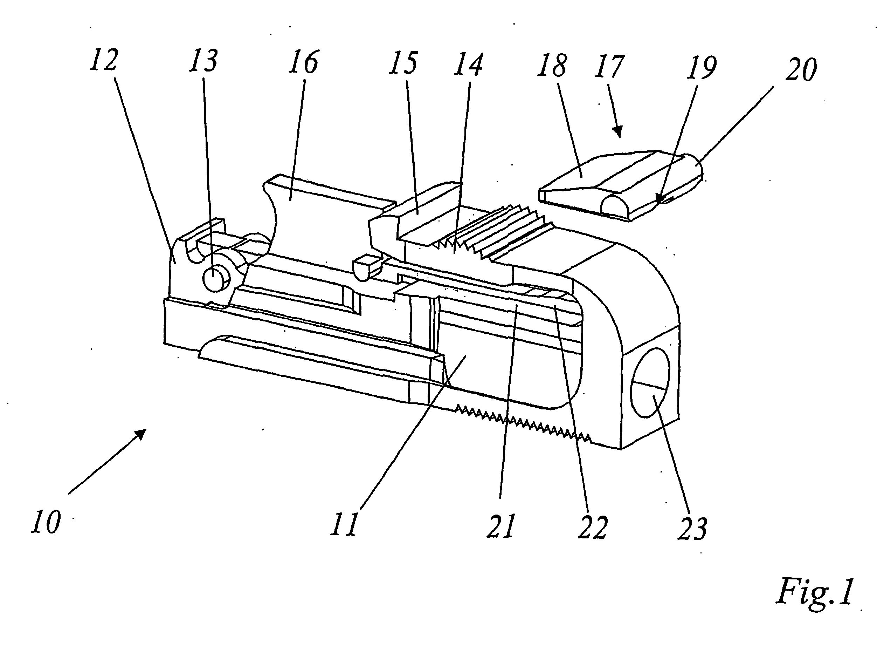

Fig. 1 bis 4 zeigen ein erstes bevorzugtes Ausführungsbeispiel einer optischen Steckverbindung nach der Erfindung, bei welchem der für die Verrastung vorgesehene Ratsarm am Steckverbinder durch ein Verriegelungselement blockierbar ist, welches mittels eines speziellen Werkzeuges zwischen einer blockierenden und einer nicht blockierenden Position hin- und hergeschoben werden kann.

Der in Fig. 1 dargestellte Steckverbinder 10 hat ein sich in Steckrichtung erstreckendes längliches Gehäuse 11 aus Kunststoff mit einer Durchgangsbohrung, in deren hintere Öffnung 23 das faseroptische Kabel eingeführt wird, und deren (nicht sichtbare) vordere Öffnung mit der das Faserende aufnehmenden Ferrule durch eine Schutzklappe 12 verschlossen ist, die um eine Schwenkachse 13 bis zu einem Anschlag 16 verschwenkbar ist, wie dies beispielsweise in der eingangs genannten US-A-5,883,995 eingehender beschrieben ist.

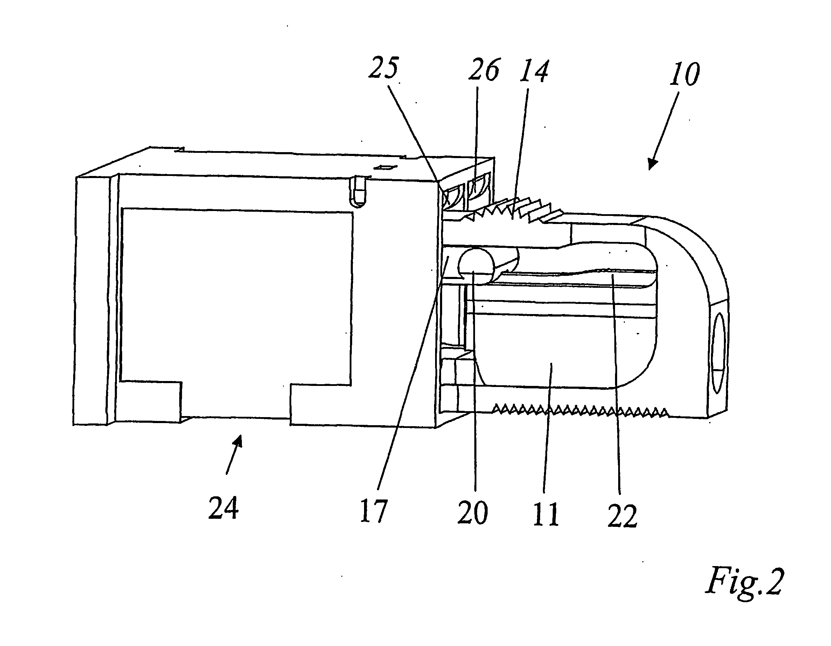

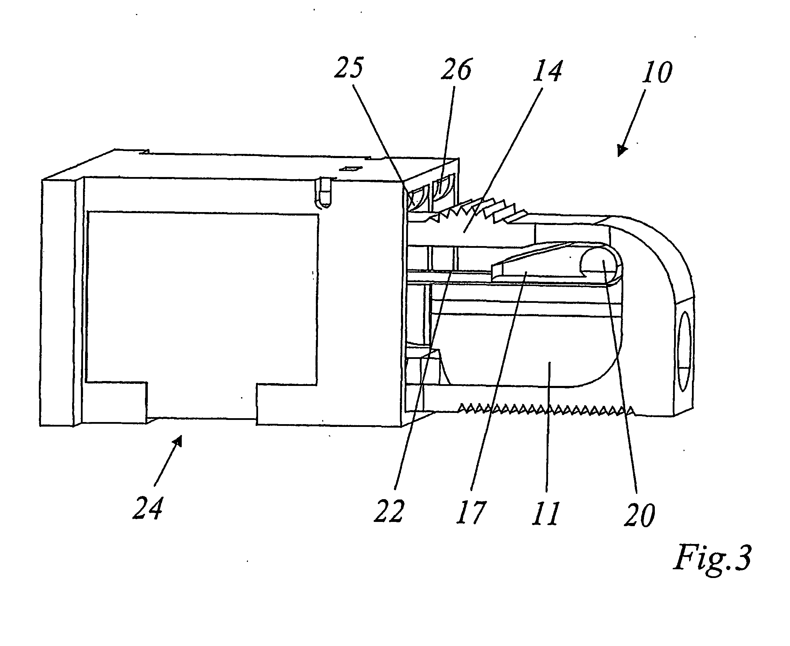

Am hinteren Ende des Steckverbinders 10 ist am Gehäuse ein Rastarm 14 angeformt, der sich mit dem freien Ende parallel und mit einem Abstand zum Gehäuse 11 nach vorne erstreckt. Am freien Ende des elastisch gegen das Gehäuse 11 verbiegbaren Rastarmes 14 ist ein Rastelement 15 in Form eines nach oben abgewinkeiten Hakens angeordnet, das beim Einstecken des Steckverbinders 10 in. eine Kupplung 24 (Fig. 2, 3) hinter einer im Inneren der Kupplung 24 vorhandenen Hinterschneidung einrastet (siehe vergleichsweise die Fig. 15 der US-A-5,883,995).

Im eingesteckten Zustand (Fig. 2, 3) ragt der Steckverbinder 10 mit einer hinteren Teillänge seines Gehäuses 11 und mit einer hinteren Teillänge des Rastarmes 14 aus der Kupplung 24 heraus. Zum Entrasten des in der Kupplung 24 eingerasteten Rastarmes 14 muss der Rastarm 14 in Richtung des Gehäuses 11 heruntergedrückt werden, bis das Rastelement 15 von der Hinterschneidung frei kommt. Bei dem in Fig. 1 bis 4 gezeigten Ausführungsbeispiel wird nun ein linear verschiebbares Verriegelungselement 17 vorgesehen, das - je nach Position - den Rasthebel 14 blockiert oder zur Entrastung freigibt. Das in Fig. 1 separat dargestellte Verriegelungselement 17 ist gemäss Fig.2 oder 3 im Zwischenraum zwischen dem Ratsarm 14 und dem Gehäuse 11 in Steckrichtung verschiebbar angeordnet. Eine Führung in Längsrichtung wird dadurch erreicht, dass das Verriegelungselement 17 mit einer auf der Unterseite angebrachten Führungsnut 19 auf einer in Längsrichtung verlaufenden Führungsschiene 22 sitzt, die aus einer ebenen Auflagefläche 21 am Gehäuse 11 herausragt.

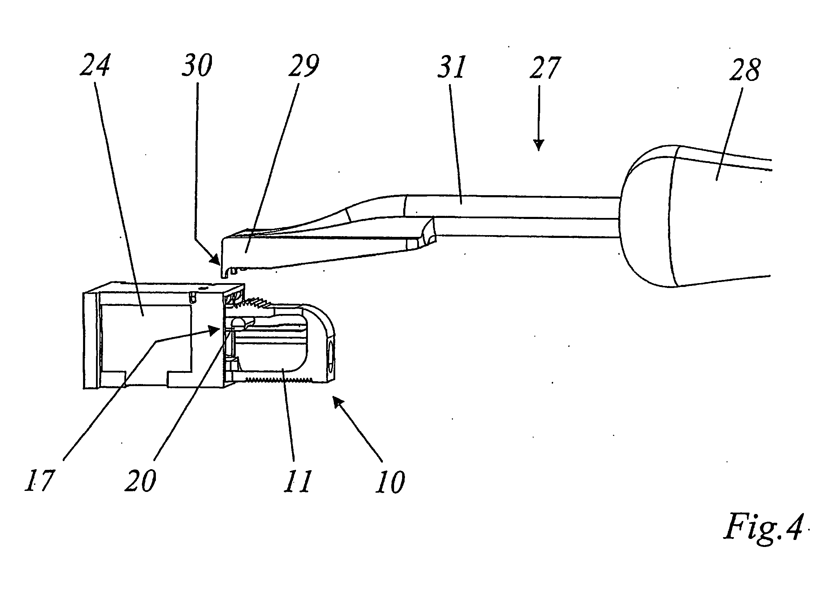

Am hinteren Ende des Verriegelungselementes 17 sind auf beiden Längsseiten seitlich über den Rastarm 14 hinausstehende Noppen 20 vorgesehen. An diesen Noppen 20 kann gemäss Fig. 4 ein zum Verschieben des Verriegelungselementes 17 nach Art einer Gabel ausgebildetes Werkzeug 27 angreifen. Das Werkzeug 27 hat einen Stiel 31, an dessen einem Ende ein Handgriff 28 befestigt ist, und an dessen anderem Ende eine Gabel 29 mit mehreren nach unten abgewinkelten Zinken 30 angeordnet ist. Jeweils zwei benachbarte Zinken 30 haben einen Abstand voneinander, der grösser ist als die Breite des Rastarmes 14, jedoch kleiner als die Breite des Verriegelungselementes 17 im Bereich der Noppen 20. Ist die Kupplung 24 eine Duplexkupplung mit zwei nebeneinander liegenden Einstecköffnungen 25 und 26, kann die Gabel 29 mit mehr als zwei Zinken 30 bestückt sein, um zwei nebeneinandersteckende Steckverbinder 10 gleichzeitig ver- bzw. entriegeln zu können.

In einer in Fig. 3 dargestellten ersten Position ist das Verriegelungselement 17 ganz nach hinten geschoben. Da der Rastarm 14 beim elastischen Verbiegen am vorderen freien Ende die grösste Ausienkung hat, während die Ausienkung am hinteren festen Ende gegen Null geht, kann er bei dieser Positionierung des Verriegelungselementes 17 weitgehend ungehindert gebogen und damit auch verrastet und entrastet werden. Eine Schräge 18 (Fig. 1) im vorderen Bereich des Verriegelungselementes 17 wirkt dabei einer möglichen Begrenzung des Biegungsbereiches entgegen. Wird das Verriegelungselement 17 aus der in Fig. 3 dargestellten ersten Position mit Hilfe des Werkzeuges 27 in die in Fig. 2 und 4 abgebildete zweite Position verschoben, ist der Ratsarm verriegelt, d.h. er kann nicht mehr zum Gehäuse 11 hin verbogen werden. Wenn die Abmessungen des Steckverbinders 10 und speziell des Rastarmes so gewählt sind, dass das Verriegelungselement klemmend in die zweite Position verschoben wird, bleibt es in dieser Verriegelungsposition fixiert und eine selbsttätige Rückkehr in die Entriegelungsposition ist nicht möglich. Die Höhe der Führungsschiene 22 über der Auflagefläche 21 ist vorzugsweise so gewählt, dass einerseits eine sicher Führung gewährleistet ist, dass andererseits aber auch das Verriegelungselement 17 aus dem Zwischenraum zwischen Rastarm 14 und Gehäuse 11 herausgenommen werden kann, wenn der Rastarm 14 genügend weit nach aussen gebogen wird.

Die in Fig. 1 bis 4 gezeigte Verriegelungsmechanik bezieht sich auf einen Rastarm, der am Steckverbinder selbst angeformt bzw. angebracht ist. Eine vergleichbare Lösung kann im Rahmen der Erfindung selbstverständlich auch für Steckverbindungen vorgesehen werden, bei denen der Rastarm -wie z.B. in der eingangs genannten EP-B1-0 570 652 offenbart - an der Kupplung angeordnet ist. In einem solchen Fall kann ein vergleichbares, linear verschiebbares Verriegelungselement entweder direkt den Rastarm an der Kupplung verriegeln, oder aber den am Steckverbinder angebrachten Kipphebel, mit dem der Rastarm zur Entrastung aus seiner Rastposition angehoben werden kann.

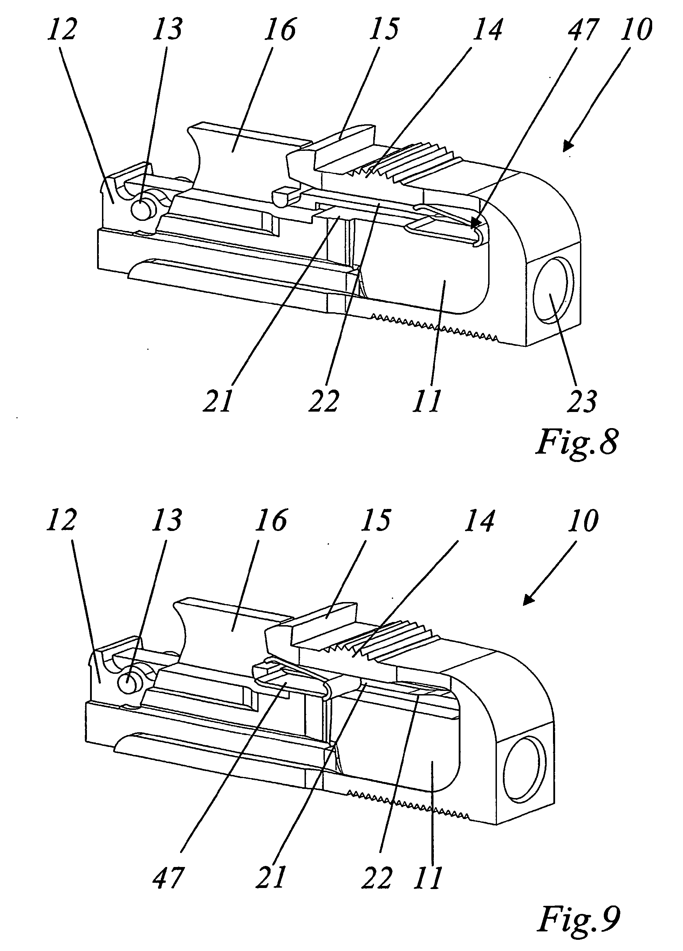

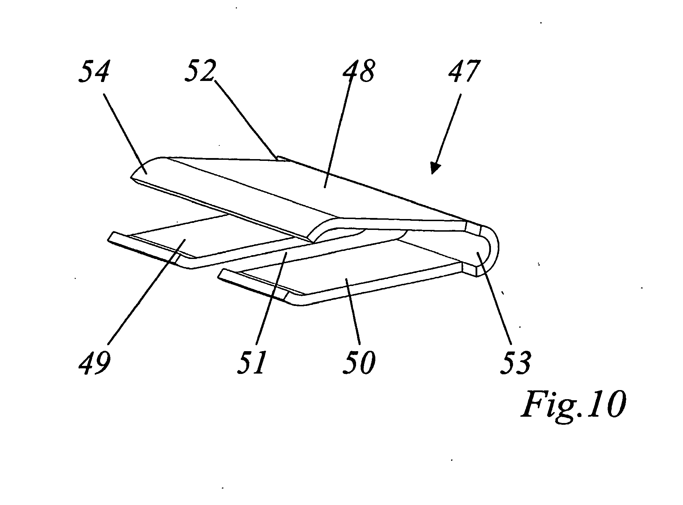

Das Verriegelungselement 17 im Ausführungsbeispiel der Fig. 1 bis 4 ist als massives Teil aus Kunststoff hergestellt. Es ist aber auch denkbar, anstelle des Kunststoff-Spritzgussteils ein Verriegelungselement in Form eines Blechbiegeteils zu verwenden. Ein entsprechendes Ausführungsbeispiel ist in den Fig. 8 bis 10 wiedergegeben. Gleiche Teile sind dabei mit den gleichen Bezugszeichen bezeichnet wie in Fig. 1 bis 4. Das Verriegelungselement 47 (Fig. 10) ist V-förmig gebogen und hat als oberen Schenkel (des liegenden "V") einen Federarm 48 und als unteren Schenkel zwei parallele Auflagearme 49, 50, zwischen denen ein Führungsschlitz 51 frei bleibt. Im Knick des "V" sind seitlich herausstehende Nasen 52, 53 angeordnet, an denen ein gabelförmiges Werkzeug 27 gemäss Fig. 4 angreifen kann. Die Arme 48-50 weisen an den freien Enden eine nach innen gerichtete Abrundung 54 auf, um ein ungestörtes Gleiten des Verriegelungselementes 47 zwischen Rastarm 14 und Gehäuse 11 des Steckverbinders 10 zu ermöglichen.

Das Verriegelungselement 47 wird - wie in Fig. 8 und 9 gezeigt, in Steckrichtung verschiebbar zwischen dem Rastarm 14 und der Auflagefläche 21 am Gehäuse 11 gelagert, wobei die Führungsschiene 22 in den Führungsschlitz 51 eingreift und eine Längsführung bewirkt. Das Verriegelungselement 47 liegt mit den Auflagearmen 49, 50 flach auf der Auflagefläche 21 auf und stösst mit dem freien Ende des Federarms 48 gegen die Unterseite des Rastarmes 14. Mit der Ausbildung des Verriegelungselementes 47 als Blechbiegeteil kann dies so gestaltet werden, dass unabhängig von seiner Position immer eine leichte Kraft gegen den Rastarm 14 drückt und somit das Verriegelungselement 47 gegen ein kraftfreies oder unbeabsichtigtes Verschieben gesichert ist. Das Verriegelungselement 47 muss dabei so ausgestaltet sein, dass es auf der einen Seite nicht zusammengepresst werden kann. Darüber hinaus kann im Gehäuse 11 des Steckverbinders 10 in beiden Endpositionen für das Verriegelungselement 47 eine Vertiefung vorgesehen wer den, so dass das Verriegelungselement 47 hier einrastet.

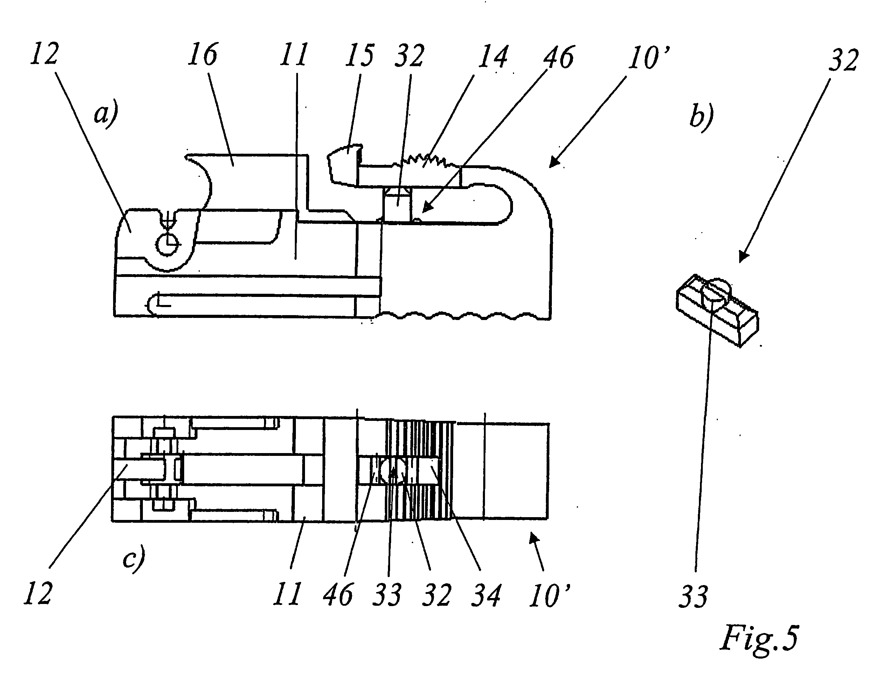

Ein anderes Ausführungsbeispiel für einen Verriegelungsmechanismus, der auf einem im Zwischenraum zwischen Rastarm 14 und Gehäuse 11 beweglich angeordneten Verriegelungselement beruht, ist in den Fig. 5a bis 5c dargestellt. Der Steckverbinder 10' dieses Ausführungsbeispiels ist weitgehend gleichartig zum Steckverbinder 10 der Fig. 1 bis 4, so dass hier für gleiche Teile auch gleiche Bezugszeichen verwendet worden sind. Das Verriegelungselement 32 ist in diesem Fall ein länglicher, im wesentlichen rechteckiger Block, der auf seiner Oberseite angeschrägte Kanten und in der Mitte ein vertikal stehendes, zylindrisches Betätigungselement 33 mit einem Eingriffsschlitz aufweist. Das Verriegelungselement 32 kann um eine senkrecht stehende Achse aus einer zweiten Position, in der es quer zum Rastarm 14 orientiert ist (siehe Fig. 5c), in eine erste Position verdreht werden, in der es parallel zum Rastarm 14 orientiert ist. Im Rastarm 14 ist eine sich in Steckrichtung erstreckende, längliche Ausnehmung 34 vorgesehen, die das Verriegelungselement 32 in vollem Umfang aufnehmen kann, wenn es sich in der zweiten Position befindet, eine Aufnahme dagegen - bis auf das Betätigungselement 32 - nicht zulässt, wenn sich das Verriegelungselement 32 in der in Fig. 5c gezeigten zweiten Position befindet. Durch die Ausnehmung 34 hindurch kann von oben das Betätigungselement 33 mittels eines Schraubendrehers betätigt, d.h., das Verriegelungselement 32 verdreht, werden.

Die Höhe des Verriegelungselementes 32 ist so gewählt, dass der Rastarm 14 auf dem Verriegelungselement 32 aufliegt und nicht zum Gehäuse 11 hin verbogen werden kann, wenn das Verriegelungselement 32 sich in der zweiten Position (Fig. 5c) befindet bzw. quer steht. Wird das Verriegelungselement 32 aus dieser zweiten Position mittels eines Schraubendrehers um 90° in die erste Position gedreht bzw. parallel zum Ratsarm 14 gestellt, kann der Rastarm praktisch frei nach unten gebogen werden, wobei das Verriegelungselement 32 in die Ausnehmung 34 eintaucht. Zur drehbaren Lagerung des Verriegelungselementes 32 am Gehäuse 11 kann im Gehäuse 11 in der Drehachse des Verriegelungselementes 32 ein Sackloch angeordnet sein, in welches das Verriegelungselement 32 mit einem auf der Unterseite angeformten Drehzapfen eingreift. Es können aber auch am Gehäuse 11 in der dem Rastarm 14 gegenüberliegenden Fläche parallele Wülste 46 angeformt sein, zwischen denen das Verriegelungselement 32 gegen ein seitliches Verrutschen fixiert ist.

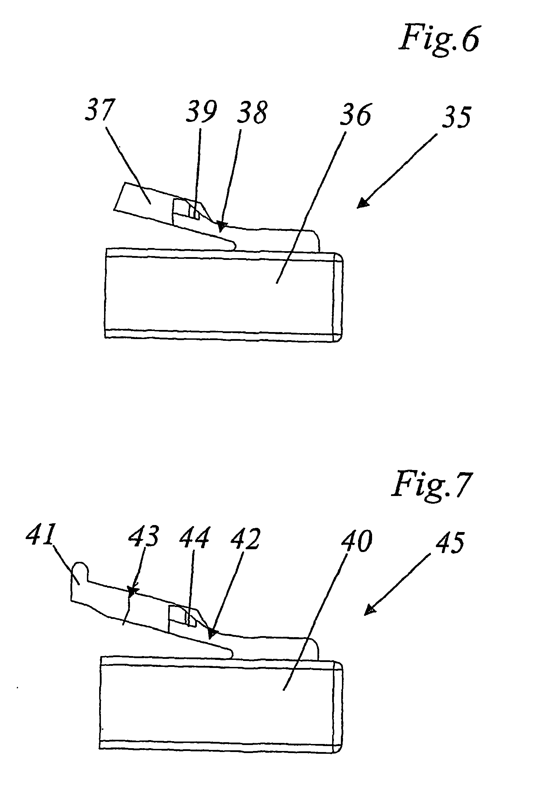

Eine alternative Art der Verriegelung im Rahmen der Erfindung ist in den Ausführungsbeispielen der Fig. 6 und 7 gezeigt. Hier wird ausgegangen von einem Steckverbinder 35 bzw. 45 vom LC-Typ, wie er beispielsweise in der US-A-5,719,977 beschrieben ist. Am Gehäuse 36 bzw. 40 des Steckverbinders 35 bzw. 45 ist auf der Oberseite ein sich mit dem freien Ende nach hinten erstreckender Rastarm 38 bzw. 42 angeformt, der Rastelemente 39 bzw. 44 zum Einrasten in eine an der Kupplung angebrachte Hinterschneidung aufweist. Der Rastarm 38 bzw. 42 geht am freien Ende in einer Verlängerung in einen Entriegelungshebel 37 bzw. 41 über, der im Stand der Technik aus der Kupplung herausragt und zum Entrasten des Steckverbinders betätigt (heruntergedrückt) werden kann. Im Ausführungsbeispiel der Fig. 6 wird nun der Entriegelungshebel 37 von vornherein so kurz ausgelegt, dass er nicht aus der Kupplung herausragt, sondem nur heruntergedrückt werden kann, indem ein Werkzeug (Schraubendreher oder dgl.) in die Kupplung eingeführt wird und an der innerhalb der Kupplung liegenden schrägen Endfläche des Entriegelungshebels 37 angreift. Es ist aber auch denkbar, gemäss Fig. 7 den Entriegelungshebel 41 zunächst mit üblicher Länge auszubilden, aber eine Sollbruchstelle 43 vorzusehen, an welcher der Hebel abgeknickt und damit auf die in Fig. 6 dargestellte Form verkürzt werden kann.

### BEZUGSZEICHENLISTE

- 10,10': Steckverbinder
- 11: Gehäuse
- 12: Schutzklappe
- 13: Schwenkachse
- 14: Rastarm
- 15: Rastelement (hakenförmig)
- 16: Anschlag
- 17,32,47: Verriegelungselement
- 18: Schräge
- 19: Führungsnut
- 20: Noppe
- 21: Auflagefläche
- 22: Führungsschiene
- 23: Öffnung
- 24: Kupplung (Duplex)
- 25,26: Einstecköffnung
- 27: Werkzeug
- 28: Handgriff
- 29: Gabel
- 30: Zinke
- 31: Stiel
- 33: Betätigungselement
- 34: Aussparung (Rastarm)
- 35,45: Steckverbinder
- 36,40: Gehäuse
- 37,41: Entriegelungshebel
- 38,42: Rastarm
- 39,44: Rastelement
- 43: Sollbruchstelle
- 46: Wulst
- 48: Federarm
- 49,50: Auflagearm
- 51: Führungsschlitz
- 52,53: Nase
- 54: Rundung

## Patentansprüche

1. Optische Steckverbindung, umfassend einen optischen Steckverbinder (10, 10', 35, 45) und eine Kupplung (24), in welche der Steckverbinder (10, 10', 35, 45) einsteckbar ist, sowie entrastbare Rastmittel (14, 15, 17; 37, 38, 39; 41, 42, 43, 44, 47), welche beim Einstecken des Steckverbinders (10, 10', 35, 45) in die Kupplung (24) ein Verrasten des Steckverbinders (10, 10', 35, 45) in der Kupplung (24) bewirken, wobei die Rastmittel (14, 15, 17; 37, 38, 39; 41, 42, 43, 44, 47) derart ausgebildet sind, dass sie im verrasteten Zustand nicht unbeabsichtigt entrastbar sind, wobei
die Rastmittel (14, 15, 17; 37, 38, 39; 41, 42, 43, 44, 47) derart ausgebildet sind, dass sie im verrasteten Zustand nur durch Einsatz eines separaten Werkzeuges (27) entrastbar sind,
die Rastmittel einen an seinem freien Ende mit einem Rastelement (15, 39, 44) versehenen, elastisch verbiegbaren Rastarm (14, 38, 42) umfassen, welcher sich elastisch verbiegend beim Einstecken des Steckverbinders (10, 10', 35, 45) in die Kupplung (24) den Steckverbinder (10, 10', 35, 45) in der Kupplung (24) verrastet, und welcher durch ein erneutes elastisches Verbiegen entrastet werden kann und wobei
der Rastarm (14, 38, 42) am Steckverbinder (10,10', 35, 45) angeordnet ist, **dadurch gekennzeichnet, dass** am Steckverbinder (10, 10') ein Verriegelungselement (17, 32, 47) angeordnet ist, welches mittels des Werkzeuges (27) zwischen einer ersten Position, in welcher der Rastarm (14) weitgehend ungehindert elastisch verbogen werden kann, und einer zweiten Position, in welcher der Rastarm (14) durch das Verriegelungselement (17, 32) an einer elastischen Verbiegung gehindert wird, hin- und herbewegt werden kan

2. Steckverbindung nach Anspruch 1, **dadurch gekennzeichnet, dass** sich der Rastarm (14) in einem Abstand parallel zum Gehäuse (11) des Steckverbinders (10, 10') erstreckt, dass der Rastarm (14) zum Verrasten und Entrasten zum Gehäuse (11) des Steckverbinders (10, 10') hin elastisch verbogen wird, und dass das Verriegelungselement (17, 32, 47) zwischen dem Rastarm (14) und dem Gehäuse (11) des Steckverbinders (10, 10') angeordnet ist.

3. Steckverbindung nach Anspruch 2, **dadurch gekennzeichnet, dass** das Verriegelungselement (17, 32, 47) herausnehmbar ist, wenn der Rastarm (14) von Gehäuse (11) des Steckverbinders (10, 10') weg nach aussen gebogen wird.

4. Steckverbindung nach Anspruch 2 oder 3, **dadurch gekennzeichnet, dass** das Verriegelungselement (17, 47) parallel zum Rastarm (14) zwischen der ersten und zweiten Position verschiebbar ist.

5. Steckverbindung nach Anspruch 4, **dadurch gekennzeichnet, dass** das Verriegelungselement (17, 47) in Längsrichtung mittels einer Führungsschiene (22) und einer Führungsnut (19) bzw. eines Führungsschlitzes (51) geführt ist.

6. Steckverbindung nach einem der Ansprüche 3 bis 5, **dadurch gekennzeichnet, dass** das Verriegelungselement (17, 47) seitlich über den Rastarm (14) hinausstehende Noppen (20) bzw. Nasen (52, 53) aufweist, an welchen zum Verschieben des Verriegelungselementes (17) ein nach Art einer Gabel ausgebildetes Werkzeug (27) angreifen kann.

7. Steckverbindung nach einem der Ansprüche 3 bis 6, **dadurch gekennzeichnet, dass** die Kupplung (24) als Duplexkupplung zum gleichzeitigen Einstecken zweier Steckverbinder ausgebildet ist, und dass die Verriegelungselemente (17) mittels des Werkzeuges (27) gleichzeitig verschiebbar sind.

8. Steckverbindung nach Anspruch 2 oder 3, **dadurch gekennzeichnet, dass** das Verriegelungselement (32) um eine senkrecht zum Rastarm (10') stehende Achse zwischen der ersten und zweiten Position verdrehbar ist.

9. Steckverbindung nach Anspruch 8, **dadurch gekennzeichnet, dass** in dem Rastarm (14) eine Ausnehmung (34) angeordnet ist, welche das Verriegelungselement (32) beim elastischen Verbiegen des Rastarmes (14) zumindest teilweise aufnimmt, wenn es sich in der ersten Position befindet, welche das Verriegelungselement (32) jedoch nicht aufnehmen kann, wenn es sich in der zweiten Position befindet.

10. Steckverbindung nach Anspruch 8 oder 9, **dadurch gekennzeichnet, dass** das Verriegelungselement (32) nur mittels eines Werkzeuges, insbesondere in Form eines Schraubendrehers, verdrehbar ist.

11. Steckverbindung nach Anspruch 1, **dadurch gekennzeichnet, dass** der Rastarm (38, 42) durch einen angeformten Entriegeiungshebel (37, 41) elastisch verbiegbar ist, und dass der Entriegelungshebel (37, 41) in seiner Länge so kurz gewählt ist, dass er bei in die Kupplung eingestecktem Steckverbinder (35, 45) nur mittels eines Werkzeuges von aussen betätigbar ist.

12. Steckverbindung nach Anspruch 11, **dadurch gekennzeichnet, dass** der Entriegelungshebel (37) in seiner entgültigen Länge am Rastarm (38) angeformt ist.

13. Steckverbindung nach Anspruch 11, **dadurch gekennzeichnet, dass** der Entriegelungshebel (41) in einer die endgültige Länge übersteigenden Länge am Rastarm (42) angeformt und an einer Sollbruchstelle (43) auf die endgültige Länge verkürzbar ist.

14. Steckverbindung nach Anspruch 6, **dadurch gekennzeichnet, dass** das Verriegelungselement (17) als massives Teil aus einem Kunststoff hergestellt ist.

15. Steckverbindung nach Anspruch 6, **dadurch gekennzeichnet, dass** das Verriegelungselement (47) als Blechbiegeteil ausgebildet ist.

16. Steckverbindung nach Anspruch 15, **dadurch gekennzeichnet, dass** das Verriegelungselement (47) V-förmig gebogen ist mit einem Federarm (48) als dem einen Schenkel des "V" und zwei parallelen Auflagearmen (49, 50), zwischen denen ein Führungsschlitz (51) angeordnet ist, als dem anderen Schenkel des "V".

17. Steckverbindung nach Anspruch 16, **dadurch gekennzeichnet, dass** am Verriegelungselement (47) im Knick des "V" zwei seitlich herausstehende Nasen (52, 53) zum Angreifen eines Werkzeuges (27) ausgebildet sind.

## Claims

1. An optical plug-in connection, comprising an optical plug-in connector (10, 10', 35, 45) and a coupling (24), into which the plug-in connector (10, 10', 35, 45) can be inserted, and also unlockable locking means (14, 15, 17; 37, 38, 39; 41, 42, 43, 44, 47), which effect locking of the plug-in connector (10, 10', 35, 45) in the coupling (24) when the plug-in connector (10, 10', 35, 45) is inserted into the coupling (24), wherein the locking means (14, 15, 17; 37, 38, 39; 41, 42, 43, 44, 47) are formed in such a way that they cannot be unintentionally unlocked when in the locked state, wherein the locking means (14, 15, 17; 37, 38, 39; 41, 42, 43, 44, 47) are formed in such a way that, when in the locked state, they can only be unlocked by use of a separate tool (27), wherein the locking means comprise a flexibly bendable locking arm (14, 38, 42) which is provided with a locking element (15, 39, 44) at its free end and, bending in a flexible manner when the plug-in connector (10, 10', 35, 45) is inserted into the coupling (24), locks the plug-in connector (10, 10', 35, 45) in the coupling (24) and can be unlocked by renewed flexible bending and wherein the locking arm (14, 38, 42) is arranged on the plug-in connector (10, 10', 35, 45), **characterized in that** at the plug-in connector (10, 10') a locking element (17, 32, 47) is arranged, which can be moved back and forth by means of a tool (27) between a first position, in which the locking arm (14) can be flexibly bent largely unhindered, and a second position, in which the locking arm (14) is hindered from flexible bending by the locking element (17, 32), is provided on the plug-in connector (10, 10').

2. The plug-in connection as claimed in claim 1, **characterized in that** the locking arm (14) extends parallel to and at a distance from the housing (11) of the plug-in connector (10, 10'), **in that** the locking arm (14) is flexibly bent toward the housing (11) of the plug-in connector (10, 10') for locking and unlocking, and **in that** the locking element (17, 32, 47) is arranged between the locking arm (14) and the housing (11) of the plug-in connector (10, 10').

3. The plug-in connection as claimed in claim 2, **characterized in that** the locking element (17, 32, 47) can be removed when the locking arm (14) is bent away outward from the housing (11) of the plug-in connector (10, 10').

4. The plug-in connector as claimed in claim 2 or 3, **characterized in that** the locking element (17, 47) is displaceable parallel to the locking arm (14) between the first position and the second position.

5. The plug-in connection as claimed in claim 4, **characterized in that** the locking element (17, 47) is guided in the longitudinal direction by means of a guiding rail (22) and a guiding groove (19) or a guiding slot (51).

6. The plug-in connection as claimed in one of claims 3 to 5, **characterized in that** the locking element (17, 47) has protuberances (20) or lugs (52, 53), which protrude laterally beyond the locking arm (14) and on which a tool (27) formed in the manner of a fork can act for displacing the locking element (17).

7. The plug-in connection as claimed in one of claims 3 to 6, **characterized in that** the coupling (24) is formed as a duplex coupling for the simultaneous insertion of two plug-in connectors, and **in that** the locking elements (17) can be displaced simultaneously by means of the tool (27).

8. The plug-in connection as claimed in claim 2 or 3, **characterized in that** the locking element (32) is pivotable between the first position and the second position about an axis perpendicular to the locking arm (10').

9. The plug-in connection as claimed in claim 8, **characterized in that** the locking arm (14) has arranged in it a clearance (34) which at least partly receives the locking element (32) during the flexible bending of the locking arm (14) when it is located in the first position, but cannot receive the locking element (32) when it is located in the second position.

10. The plug-in connection as claimed in either of claims 8 and 9, **characterized in that** it is only possible for the locking element (32) to be pivoted by means of a tool, in particular in the form of a screwdriver.

11. The plug-in connection as claimed in claim 1, **characterized in that** the locking arm (38, 42) can be flexibly bent by a formed-on unlocking lever (37, 41), and **in that** the unlocking lever (37, 41) is chosen to be so short in its length that, when the plug-in connector (35, 45) is inserted in the coupling, it can only be actuated from the outside by means of a tool.

12. The plug-in connection as claimed in claim 11, **characterized in that** the unlocking lever (37) is formed on the locking arm (38) in its final length.

13. The plug-in connection as claimed in claim 11, **characterized in that** the unlocking lever (41) is formed on the locking arm (42) in a length exceeding the final length and can be shortened to the final length at a predetermined breaking point (43).

14. The plug-in connection as claimed in claim 6, **characterized in that** the locking element (17) is produced from a plastic as a solid part.

15. The plug-in connection as claimed in claim 6, **characterized in that** the locking element (47) is formed as a bent sheet-metal part.

16. The plug-in connection as claimed in claim 15, **characterized in that** the locking element (47) is bent in a V-shaped manner, with a spring arm (48) as one leg of the "V" and two parallel supporting arms (49, 50), between which a guiding slot (51) is arranged, as the other leg of the "V".

17. The plug-in connection as claimed in claim 16, **characterized in that** two laterally protruding lugs (52, 53) for a tool (27) to act on are formed on the locking element (47) at the vertex of the "V".

## Revendications

1. Système de connexion optique par enfichage, comprenant un connecteur optique enfichable (10, 10', 35, 45) et un élément d'accouplement (24), dans lequel le connecteur enfichable (10, 10', 35, 45) peut être enfiché, ainsi que des moyens d'encliquetage (14, 15, 17 ; 37, 38, 39 ; 41, 42, 43, 44, 47) désencliquetables qui provoquent, à l'enfichage du connecteur enfichable (10, 10', 35, 45) dans l'élément d'accouplement (24), un encliquetage du connecteur enfichable (10, 10', 35, 45) dans l'élément d'accouplement (24), les moyens d'encliquetage (14, 15, 17 ; 37, 38, 39 ; 41, 42, 43, 44, 47) étant réalisés de telle sorte qu'ils ne sont pas désencliquetables non intentionnellement à l'état encliqueté ;
les moyens d'encliquetage (14, 15, 17 ; 37, 38, 39 ; 41, 42, 43, 44, 47) étant réalisés de telle sorte qu'ils ne sont désencliquetables à l'état encliqueté qu'à l'aide d'un outil (27) séparé ;
les moyens d'encliquetage étant pourvus, au niveau de leur extrémité libre, d'un élément d'encliquetage (15, 39, 44) comprenant un bras d'encliquetage (14, 38, 42) pouvant être fléchi de façon élastique et encliquetant par flexion élastique, à l'enfichage du connecteur enfichable (10, 10', 35, 45) dans l'élément d'accouplement (24), le connecteur enfichable (10, 10', 35, 45) dans l'élément d'accouplement (24) et pouvant être désencliqueté par application d'une nouvelle flexion élastique ; et
le bras d'encliquetage (14, 38, 42) étant disposé au niveau du connecteur enfichable (10, 10', 35, 45) ; **caractérisé en ce qu'**un élément de verrouillage (17, 32, 47) est disposé au niveau du connecteur enfichable (10, 10'), ledit élément pouvant être déplacé selon un mouvement de va-et-vient à l'aide de l'outil (27), entre une première position dans laquelle le bras d'encliquetage (14) peut être fléchi élastiquement de façon largement non entravée et une deuxième position dans laquelle la flexion élastique du bras d'encliquetage (14) est entravée par l'élément de verrouillage (17, 32).

2. Système de connexion par enfichage selon la revendication 1, **caractérisé en ce que** le bras d'encliquetage (14) s'étend à une certaine distance parallèlement au boîtier (11) du connecteur enfichable (10, 10'), **en ce que** le bras d'encliquetage (14) est fléchi de façon élastique en direction du boîtier (11) du connecteur enfichable (10, 10') à des fins d'encliquetage et de désencliquetage, et **en ce que** l'élément de verrouillage (17, 32, 47) est disposé entre le bras d'encliquetage (14) et le boîtier (11) du connecteur enfichable (10, 10').

3. Système de connexion par enfichage selon la revendication 2, **caractérisé en ce que** l'élément de verrouillage (17, 32, 47) peut être retiré lorsque le bras d'encliquetage (14) est fléchi vers l'extérieur hors du boîtier (11) du connecteur enfichable (10, 10').

4. Système de connexion par enfichage selon la revendication 2 ou 3, **caractérisé en ce que** l'élément de verrouillage (17, 47) peut être coulissé entre la première et la deuxième position parallèlement au bras d'encliquetage (14).

5. Système de connexion par enfichage selon la revendication 4, **caractérisé en ce que** l'élément de verrouillage (17, 47) est guidé dans la direction longitudinale à l'aide d'un rail de guidage (22) et d'une rainure de guidage (19) ou d'une fente de guidage (51).

6. Système de connexion par enfichage selon l'une quelconque des revendications 3 à 5, **caractérisé en ce que** l'élément de verrouillage (17, 47) présente latéralement, au-dessus du bras d'encliquetage (14), des boucles (20) ou des becs (52, 53) saillant(e)s au niveau desquel(le)s un outil (27) réalisé à la façon d'une fourche peut s'emboîter pour faire coulisser l'élément de verrouillage (17).

7. Système de connexion par enfichage selon l'une quelconque des revendications 3 à 6, **caractérisé en ce que** l'élément d'accouplement (24) prend la forme d'un double élément d'accouplement permettant d'enficher simultanément deux connecteurs enfichables et **en ce que** les éléments de verrouillage (17) peuvent être coulissés simultanément à l'aide de l'outil (27).

8. Système de connexion par enfichage selon la revendication 2 ou 3, **caractérisé en ce que** l'élément de verrouillage (32) peut être tourné entre la première et la deuxième position autour d'un axe s'étendant perpendiculairement au bras d'encliquetage (10').

9. Système de connexion par enfichage selon la revendication 8, **caractérisé en ce qu'**un évidement (34) est disposé dans le bras d'encliquetage (14), ledit évidement logeant au moins en partie l'élément de verrouillage (32) lors de la flexion élastique du bras d'encliquetage (14) lorsqu'il se trouve dans la première position sans pour autant pouvoir loger l'élément de verrouillage (32) lorsqu'il se trouve dans la deuxième position.

10. Système de connexion par enfichage selon la revendication 8 ou 9, **caractérisé en ce que** l'élément de verrouillage (32) ne peut être tourné qu'à l'aide d'un outil prenant notamment la forme d'un tournevis.

11. Système de connexion par enfichage selon la revendication 1, **caractérisé en ce que** le bras d'encliquetage (38, 42) peut être fléchi de façon élastique par un levier de déverrouillage (37, 41) moulé et **en ce que** la longueur du levier de déverrouillage (37, 41) est choisie si courte qu'il ne peut être actionné de l'extérieur, lorsque le connecteur enfichable (35, 45) est enfiché dans l'élément d'accouplement, qu'à l'aide d'un outil.

12. Système de connexion par enfichage selon la revendication 11, **caractérisé en ce que** le levier de déverrouillage (37) est moulé au niveau du bras d'encliquetage (38) dans sa longueur définitive.

13. Système de connexion par enfichage selon la revendication 11, **caractérisé en ce que** le levier de déverrouillage (41) peut être moulé au niveau du bras d'encliquetage (42) dans une longueur dépassant la longueur définitive puis raccourci à la longueur définitive au niveau d'un point de rupture théorique (43).

14. Système de connexion par enfichage selon la revendication 6, **caractérisé en ce que** l'élément de verrouillage (17) est fabriqué en matière plastique sous la forme d'une pièce massive.

15. Système de connexion par enfichage selon la revendication 6, **caractérisé en ce que** l'élément de verrouillage (47) prend la forme d'une partie flexible en tôle.

16. Système de connexion par enfichage selon la revendication 15, **caractérisé en ce que** l'élément de verrouillage (47) est fléchi en forme de V avec un bras sur ressort (48) prenant la forme d'un côté du « V » et deux bras porteurs (49, 50) parallèles entre lesquels est disposée une fente de guidage (51) formant l'autre côté du « V ».

17. Système de connexion par enfichage selon la revendication 16, **caractérisé en ce que** deux becs (52, 53) saillants latéralement sont prévus pour agripper un outil (27) au niveau de l'élément de verrouillage (47), dans le coude du « V ».
